(19) Europäisches Patentamt / European Patent Office / Office européen des brevets

(11) **EP 3 974 227 B1**

(12) **EUROPEAN PATENT SPECIFICATION**

(45) Date of publication and mention
of the grant of the patent:
**18.12.2024 Bulletin 2024/51**

(21) Application number: **21194435.0**

(22) Date of filing: **01.09.2021**

(51) International Patent Classification (IPC):
*B60K 6/387* (2007.10)     *B60K 6/442* (2007.10)
*B60W 10/08* (2006.01)     *B60W 10/11* (2012.01)
*B60W 20/15* (2016.01)     *B60W 20/10* (2016.01)
*B60W 50/14* (2020.01)     *B60W 20/30* (2016.01)
*B60K 6/48* (2007.10)

(52) Cooperative Patent Classification (CPC):
**B60K 6/387; B60K 6/442; B60W 10/08;
B60W 10/11; B60W 20/10; B60W 20/11;
B60W 20/15; B60W 50/14;** B60K 2006/4808;
B60K 2006/4825; B60W 2510/1005;
B60W 2540/10; B60W 2540/14; B60W 2710/083;
B60Y 2400/71;                                    (Cont.)

(54) **CONTROL DEVICE FOR HYBRID VEHICLE**

STEUERUNGSVORRICHTUNG FÜR HYBRIDFAHRZEUG

DISPOSITIF DE COMMANDE POUR VÉHICULE HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2020 JP 2020158751**

(43) Date of publication of application:
**30.03.2022 Bulletin 2022/13**

(73) Proprietor: **Suzuki Motor Corporation
Shizuoka 432-8611 (JP)**

(72) Inventor: **ITO, Yoshiki
Hamamatsu-shi, 432-8611 (JP)**

(74) Representative: **Henkel & Partner mbB
Patentanwaltskanzlei, Rechtsanwaltskanzlei
Maximiliansplatz 21
80333 München (DE)**

(56) References cited:
**US-A1- 2014 236 405     US-A1- 2019 367 009
US-A1- 2020 122 712**

(52) Cooperative Patent Classification (CPC): (Cont.)
Y02T 10/62

**Description**

[Technical Field]

This invention relates to a control device for a hybrid vehicle.

[Background of the Invention]

JP 2009-292314 A describes a technology of prompting a shift operation to an appropriate shift stage by giving a variation to a driving torque of an electric motor to generate a vibration corresponding to a driving vibration on the assumption that a vehicle wheel is driven by an engine in an EV mode in a hybrid vehicle including a manual transmission unit.

When performing a shift operation in an HEV mode, the driver generally estimates an engine rotation speed from not only an engine rotation speed display but also sound or vibration of the engine and performs the shift operation.

Further, even when the engine is driven with the clutch disengaged, the vibration caused by the inertial force of the piston, the crankshaft, and the like causes a vehicle body to vibrate through an engine mount. This is called the oscillating force of the engine.

US 2020/122712 A1 discloses a vehicle control device having a prime mover, a first rotating member which is rotated by power of the prime mover, and a second rotating member which is connected to the first rotating member and which rotate a drive wheel, including a deriving unit which derives a prime mover request output that is an output requested by the prime mover in accordance with a request output to the drive wheel, and a control unit which increases or decreases a rotation speed of the prime mover between a lower limit rotation speed and an upper limit rotation speed in accordance with a change in a rotation speed of the drive wheel. The control unit increases or decreases the rotation speed of the prime mover without changing a power output by the prime mover or an output of the first rotating member in accordance with the prime mover request output.

JP H11 346402 A discloses a hybrid electric vehicle employing a controller with a function which varies the target generated outer of a generator, in accordance with a vehicle speed in order to control a generator driving engine. Even when the generation run on an uphill road or in the case of the generation run with a heavy load, the target generated output is set to be small so as to obtain the engine noise which matches with low-vehicle speed region.

US 2014/236405 A1 discloses a controller for a hybrid vehicle including: an electric generator that generates an electricity by a power of an internal combustion engine; an electric storage apparatus that is able to store the generated electricity of the electric generator; an electric motor that generates a vehicle driving power through at least the generated electricity of the electric generator or the stored electricity of the electric storage apparatus; a required-driving-force measurement section that measures a required driving force of a driver; a sound parameter setting section that sets a parameter relating to a sound which can be heard by the driver; and an electric generation control section that controls an electric generation output of the electric generator based on the required driving force, which is measured by the required-driving-force measurement section, and the parameter which is set by the sound parameter setting section.

A control device for a hybrid vehicle is also disclosed in US 2019/367009 A1.

[Prior Art]

[Patent Literature]

[Patent Literature 1] JP 2009-292314 A
[Patent Literature 2] US 2020/122712 A1
[Patent Literature 3] JP H11 346402 A
[Patent Literature 4] US 2014/236405 A1
[Patent Literature 5] US 2019/367009 A1

[Summary of the Invention]

[Problem to be solved by the Invention]

However, in the hybrid vehicle described in JP 2009-292314 A, since the oscillating force of the engine is not considered, it is not possible to prompt the driver to perform the shift operation similar to that in the HEV mode only by the sound or vibration generated by the above-described control.

Here, an object of this invention is to provide a control device for a hybrid vehicle capable of prompting a driver to perform a shift operation similar to that in an HEV mode by sound or vibration even in an EV mode.

[Means to solve the problem]

In order to solve the above-described problems, there is provided a control device for a hybrid vehicle as set out in independent claim 1. Advantageous developments are defined in the dependent claims.

[Effect of the Invention]

In this way, according to this invention, it is possible to prompt a driver to perform a shift operation similar to that in an HEV mode by sound or vibration even in an EV mode.

[Brief description of figures]

[Fig. 1] Fig. 1 is a schematic configuration diagram of a hybrid vehicle according to an embodiment of this invention.
[Fig. 2] Fig. 2 is a flowchart showing a procedure of an MG torque instruction value calculation process of a control device for the hybrid vehicle according to an embodiment of this invention.
[Fig. 3] Fig. 3 is a flowchart showing a procedure of a virtual engine rotation speed calculation process of the control device for the hybrid vehicle according to an embodiment of this invention.
[Fig. 4] Fig. 4 is a flowchart showing a procedure of a torque variation component calculation process of the control device for the hybrid vehicle according to an embodiment of this invention.
[Fig. 5] Fig. 5 is a flowchart showing a procedure of an oscillating force component calculation process of the control device for the hybrid vehicle according to an embodiment of this invention.
[Fig. 6] Fig. 6 is a diagram showing an example of a driver request torque calculation map of the control device for the hybrid vehicle according to an embodiment of this invention.
[Fig. 7] Fig. 7 is a diagram showing an example of a torque variation component amplitude map of the control device for the hybrid vehicle according to an embodiment of this invention.
[Fig. 8] Fig. 8 is a diagram showing an example of an oscillating force component amplitude table of the control device for the hybrid vehicle according to an embodiment of this invention.
[Fig. 9] Fig. 9 is a schematic configuration diagram of the hybrid vehicle according to an embodiment of this invention in which a motor generator is provided in a power transmission path between an engine and a manual transmission.

[Embodiment(s) of the Invention]

A control device for a hybrid vehicle according to embodiments of this invention includes: a manual transmission unit allowing a driver to manually select an arbitrary shift stage; an engine driving a drive wheel through the manual transmission unit; a clutch enabling or disabling the transmission of power between the engine and the manual transmission unit; an electric motor; and a control unit switching an EV mode allowing the vehicle to run only using the electric motor as a drive source and an HEV mode allowing the vehicle to run using the engine and the electric motor as a drive source, wherein in the EV mode, the control unit allows the electric motor to generate driving power corresponding to driving power according to an accelerator operation, a clutch operation, and a shift operation of the driver in the HEV mode, and wherein the electric motor generates a virtual driving vibration corresponding to a driving vibration when the engine drives the drive wheel in the HEV mode and a virtual engine vibration corresponding to a vibration generated by an inertial force of the engine in the HEV mode.
Accordingly, the control device for the hybrid vehicle according to embodiments of this invention can prompt the driver to perform a shift operation similar to that in the HEV mode by sound or vibration even in the EV mode.

[Embodiments]

Hereinafter, a hybrid vehicle equipped with a control device according to embodiments of this invention will be described in detail with reference to the drawings.

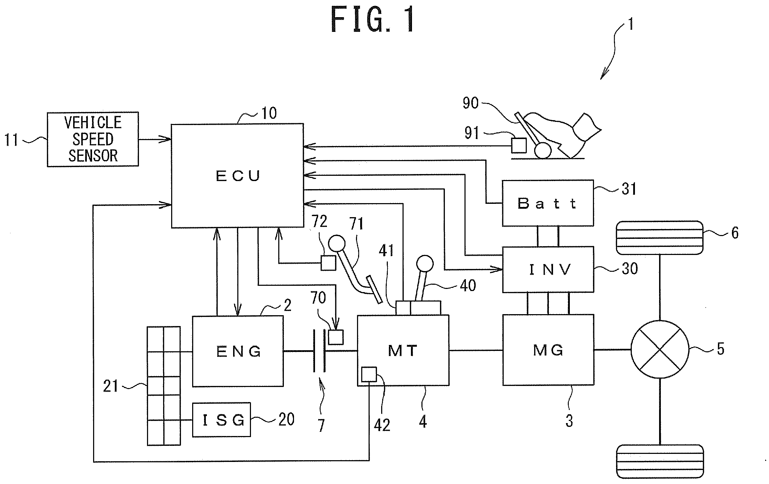

In Fig. 1, a hybrid vehicle 1 according to embodiments of this invention includes an engine 2, a motor generator 3 which is an electric motor, a manual transmission 4 which is a manual transmission unit, a differential 5, a drive wheel 6, and an electric control unit (ECU) 10 which is a control unit.
The engine 2 is provided with a plurality of cylinders. In this embodiment, the engine 2 is configured to perform a series of four strokes including an intake stroke, a compression stroke, an expansion stroke, and an exhaust stroke on each cylinder.

An integrated starter generator (ISG) 20 is connected to the engine 2. The ISG 20 is connected to a crankshaft of the engine 2 through a belt 21 and the like.

The ISG 20 rotates when electric power is supplied thereto and has a function of an electric motor rotationally driving the engine 2 and a function of a generator converting a rotational force input from the crankshaft into electric power.

The motor generator 3 has a function of an electric motor which is driven by the electric power supplied from a battery 31 via an inverter 30 and a function of a generator which generates power by the reverse driving power input from a differential 5.

The inverter 30 converts the DC electric power supplied from the battery 31 into three-phase AC electric power and supplies the three-phase AC electric power to the motor generator 3 or converts the three-phase AC electric power generated by the motor generator 3 into DC electric power and charges the battery 31 by the control of the ECU 10.

The battery 31 is composed of a secondary battery such as a lithium ion battery.

The manual transmission 4 is configured to output a rotation output from the engine 2 by shifting the rotation to a shift ratio corresponding to any one of a plurality of shift stages. An output shaft of the manual transmission 4 is connected to the right and left drive wheels 6 through the differential 5. An output shaft of the motor generator 3 is connected to the output shaft of the manual transmission 4.

As the shift stage which can be established by the manual transmission 4, for example, running shift stages from a first speed stage corresponding to a low speed stage to a fifth speed stage corresponding to a high speed stage and a reverse stage are known. The number of running shift stages is different depending on the specification of the hybrid vehicle 1 and is not limited to the above-described first to fifth speed stages.

The shift stage of the manual transmission 4 is switched in response to an operation position of a selector 40 operated by a driver. The operation position of the selector 40 is detected by a shift position sensor 41. The shift position sensor 41 is connected to the ECU 10 and transmits a detection result to the ECU 10.

The manual transmission 4 is provided with a neutral switch 42.

The neutral switch 42 is connected to the ECU 10. The neutral switch 42 is a switch which detects a state in which any shift stage of the manual transmission 4 is not established, that is, a neutral state and is turned on when the manual transmission 4 is in a neutral state.

A clutch 7 is provided in a power transmission path between the engine 2 and the manual transmission 4. As the clutch 7, for example, a friction clutch can be used. The engine 2 and the manual transmission 4 are connected to each other through the clutch 7.

The clutch 7 is operated by a clutch actuator 70 and is configured to be switched to any one of an engaged state in which power is transmitted between the engine 2 and the motor generator 3, a released state in which no power is transmitted, and a half-clutch state in which torque is transmitted with a difference in rotation. The clutch actuator 70 is connected to the ECU 10 and is controlled by the ECU 10.

The ECU 10 controls the clutch actuator 70 in response to the stepping amount of the clutch pedal 71 operated by the driver so that the operation similar to that in the manual clutch is performed.

The stepping amount of the clutch pedal 71 is detected by the clutch pedal sensor 72.

The clutch pedal sensor 72 is connected to the ECU 10 and transmits a signal in response to the stepping amount of the clutch pedal 71 to the ECU 10.

The hybrid vehicle 1 includes an accelerator pedal 90 operated by the driver. The stepping amount of the accelerator pedal 90 is detected by an accelerator opening degree sensor 91. The accelerator opening degree sensor 91 is connected to the ECU 10, detects the stepping amount of the accelerator pedal 90 as the accelerator opening degree, and transmits a signal in response to the accelerator opening degree to the ECU 10.

The ECU 10 is configured as a computer unit including a central processing unit (CPU), a random access memory (RAM), a read only memory (ROM), a flash memory storing backup data or the like, an input port, and an output port.

The ROM of the computer unit stores a program for allowing the computer unit to function as the ECU 10 along with various constants or maps. That is, since the CPU executes a program stored in the ROM by using the RAM as a working region, the computer unit functions as the ECU 10 of this embodiment.

A vehicle speed sensor 11 is connected to the ECU 10 in addition to the above-described sensors. The vehicle speed sensor 11 detects the vehicle speed of the hybrid vehicle 1 and transmits the detection result to the ECU 10.

The ECU 10 is configured to switch the control mode of the hybrid vehicle 1. As the control mode of this embodiment, an EV mode and an HEV mode are set.

The EV mode is a control mode in which the clutch 7 is in a released state and the hybrid vehicle 1 is allowed to run by the power of the motor generator 3. The HEV mode is a control mode in which the clutch 7 is in an engaged state and the hybrid vehicle 1 is allowed to run by the power of the engine 2 or the engine 2 and the motor generator 3.

The ECU 10 switches the EV mode and the HEV mode based on, for example, the accelerator opening degree and the engine rotation speed.

In the EV mode, the ECU 10 calculates the virtual engine rotation speed by assuming the engine rotation speed when the accelerator operation, the clutch operation, and the shift operation similar to those in the HEV mode are performed.

The ECU 10 calculates the virtual engine rotation speed based on, for example, the driver request torque, the clutch operation amount, the shift position, and the engine inertia moment.

In the EV mode, the ECU 10 allows the motor generator 3 to generate a virtual driving vibration simulating a driving vibration when the engine 2 drives the drive wheel 6 in the HEV mode and a virtual engine vibration simulating a vibration generated by the inertial force of the engine 2 in the HEV mode.

For example, in order to generate the virtual driving vibration, the ECU 10 calculates the torque variation component based on the virtual engine rotation speed and adds the torque variation component to the driver request torque in the crankshaft of the engine 2.

For example, in order to generate the virtual engine vibration, the ECU 10 calculates the oscillating force component based on the virtual engine rotation speed and adds the oscillating force component to the torque corresponding to the output shaft of the manual transmission 4.

Additionally, in the EV mode, the clutch 7 is always controlled in the released state, but to prevent the description from becoming complicated, the virtual engaged state of the clutch 7 corresponding to the clutch pedal operation will be simply described as the engaged state (the engaged state, the half-clutch state, and the released state) of the clutch 7 in the embodiments unless otherwise specified.

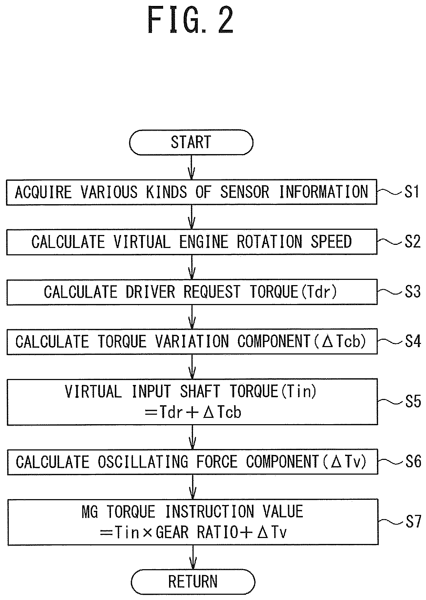

A process of calculating the MG torque instruction value which is the torque instruction value to the motor generator 3 in the EV mode by the control device according to this embodiment with the above-described configuration will be described with reference to Fig. 2. Additionally, the MG torque instruction value calculation process to be described below is started and performed at a predetermined time interval when the control mode is shifted to the EV mode and is ended when the control mode is shifted to the HEV mode.

In step S 1, the ECU 10 acquires various kinds of sensor information of the hybrid vehicle 1 such as a vehicle speed, a shift position, an accelerator opening degree, and a clutch pedal stepping amount. After the process of step S 1 is performed, the ECU 10 performs the process of step S2.

In step S2, the ECU 10 calculates the virtual engine rotation speed by the method to be described later. After the process of step S2 is performed, the ECU 10 performs the process of step S3.

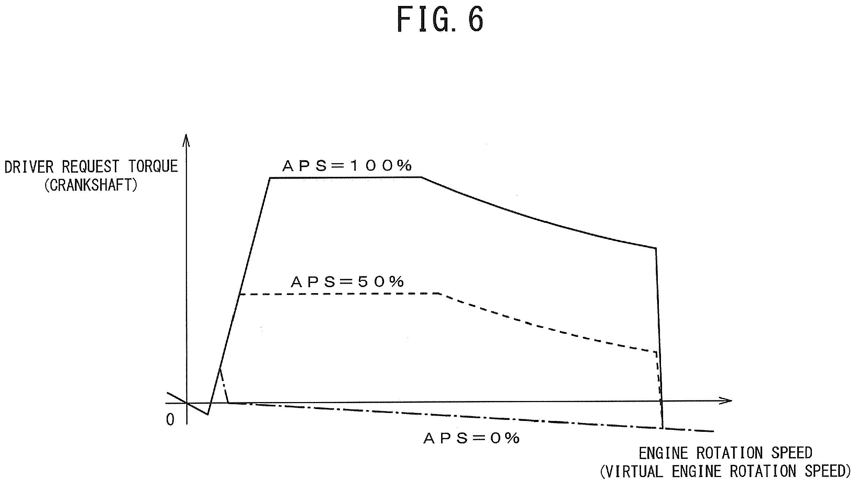

In step S3, the ECU 10 calculates a driver request torque (Tdr) by interpolating the map shown in Fig. 6 based on the accelerator opening degree and the engine rotation speed (the virtual engine rotation speed). In the drawing, "APS" indicates the accelerator opening degree. After the process of step S3 is performed, the ECU 10 performs the process of step S4.

The driver request torque map shown in Fig. 6 is set to have a negative value regardless of the accelerator opening degree in a predetermined rotation speed range below idle rotation (a region where self-sustaining operation is not possible) and simulates an engine stall when the virtual engine rotation speed decreases in the EV mode.

Further, the driver request torque map is set to have a negative value regardless of the accelerator opening degree also in a high rotation speed range that reduces engine torque by cutting fuel or the like to prevent over-rotation of the engine 2 and simulates a state in which engine torque is reduced by cutting fuel or the like when the virtual engine rotation speed becomes excessive in the EV mode.

In step S4, the ECU 10 calculates the torque variation component (ΔTcb) for simulating the torque variation caused by combustion by the method to be described later. After the process of step S4 is performed, the ECU 10 performs the process of step S5.

The torque variation component simulates a state in which the vehicle body is vibrated longitudinally such that the torque variation of the engine 2 becomes the torque variation of the drive wheel 6. Accordingly, the torque variation is applied only in the operation state in which the gear is in and the clutch 7 is engaged and is not applied in the half-clutch state or the clutch released operation state.

The torque variation component is set to increase while the virtual engine rotation speed is low and the vibration increases to prompt the shift operation to the low speed stage when the selected shift stage is from an appropriate shift stage to a high speed stage when the vehicle runs in the EV mode in the clutch engaged state and the gear-in state.

In step S5, the ECU 10 calculates the virtual input shaft torque (Tin) corresponding to the input torque of the input shaft of the manual transmission 4 by adding the driver request torque (Tdr) and the torque variation component (ΔTcb). After the process of step S5 is performed, the ECU 10 performs the process of step S6.

In step S6, the ECU 10 calculates the oscillating force component (ΔTv) in order to simulate the vibration caused by the oscillating force of the engine 2 by the method to be described later. After the process of step S6 is performed, the ECU 10 performs the process of step S7.

The oscillating force component simulates a state in which the vibration caused by the inertial force of the piston, the crankshaft, or the like of the engine 2 vibrates the vehicle body through the engine mount. Accordingly, the magnitude of the vibration is determined according to the engine rotation speed regardless of whether the clutch is operated to be released or engaged or the manual transmission 4 is in a gear-in state or a neutral state and the vibration tends to increase during a high speed rotation at which the inertial force is large.

In step S7, the ECU 10 obtains the MG torque instruction value by adding the oscillating force component (ΔTv) to a value obtained by multiplying the virtual input shaft torque (Tin) by a gear ratio (a gear ratio set to zero in a neutral state) corresponding to the shift stage selected by the manual transmission 4. After the process of step S7 is performed, the ECU 10 ends the MG torque instruction value calculation process.

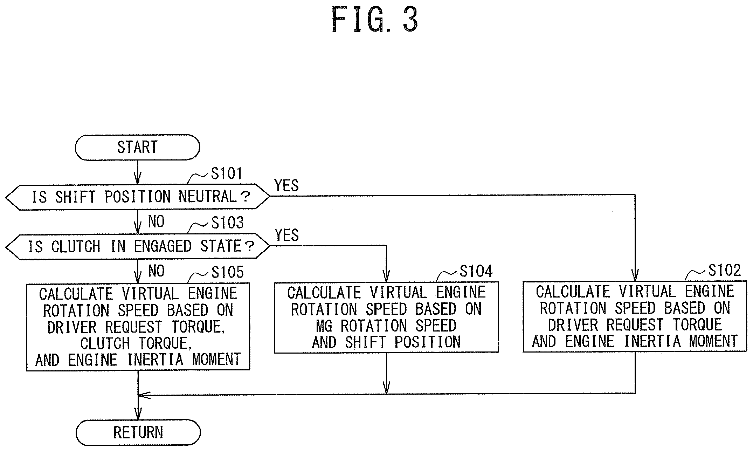

A virtual engine rotation speed calculation process in step S2 of such an MG torque instruction value calculation process will be described with reference to Fig. 3.

In step S101, the ECU 10 determines whether or not the shift position is neutral. When it is determined that the shift position is neutral, the ECU 10 performs the process of step S102.

When it is determined that the shift position is not neutral, the ECU 10 performs the process of step S103.

In step S 102, the ECU 10 calculates the virtual engine rotation speed based on the driver request torque and the engine inertia moment. After the process of step S 102 is performed, the ECU 10 ends the virtual engine rotation speed calculation process.

When the shift position is neutral, a change rate of the engine rotation speed is determined by the engine torque and the engine inertia moment in the HEV mode. Here, in the case of the EV mode, the virtual engine rotation speed is calculated by the following Formula (1) from the driver request torque and the engine inertia moment.

$$Ne(n) = Ne(n-1) + (Te/Ie) \times tp \cdots (1)$$

where, Ne(n) is the virtual engine rotation speed [rad/s], Ne(n-1) is the virtual engine rotation speed (previous value) [rad/s], Ie is the engine inertia [kg·m$^2$], Te is the driver request torque [Nm], and tp is the calculation cycle [s].

In step S 103, the ECU 10 determines whether or not the clutch 7 is in the engaged state. When it is determined that the clutch 7 is in the engaged state, the ECU 10 performs the process of step S104.

When it is determined that the clutch 7 is not in the engaged state, the ECU 10 performs the process of step S105.

Here, it is determined that the clutch 7 is in the engaged state when both Conditions 1 and 2 below are satisfied. Since the clutch 7 may be in the process of shifting to the engaged state (a state in which the differential rotation of the clutch 7 is decreasing toward zero) only in Condition 1, it is determined that the clutch 7 is engaged when Condition 2 (the differential rotation of the clutch 7 is almost zero) is also satisfied.

$$Condition\ 1 \cdots |Te| < Tc$$

$$Condition\ 2 \cdots Ni - \alpha < Ne(n-1) < Ni + \alpha$$

where, Ne(n-1) is the virtual engine rotation speed (previous value) [rad/s], Te is the driver request torque [Nm], Tc is the clutch transmission torque upper limit [Nm], Ni is the input rotation speed [rad/s], and α is the clutch engagement determination rotation difference threshold [rad/s],

Additionally, the input rotation speed (Ni) is calculated from the gear ratio of the selected shift stage and the MG rotation speed which is the rotation speed of the motor generator 3.

In step S 104, the ECU 10 calculates the virtual engine rotation speed based on the MG rotation speed and the shift position. After the process of step S104 is performed, the ECU 10 ends the virtual engine rotation speed calculation process.

When the clutch 7 is in the engaged state, the engine rotation speed is the same as the input shaft rotation speed of the manual transmission 4 in the HEV mode. Here, the virtual engine rotation speed is calculated by the following Formula (2) from the gear ratio of the shift stage selected from the shift position and the MG rotation speed in the EV mode.

$$Ne(n) = Nmg \times gear\ ratio \cdots (2)$$

where, Ne(n) is the virtual engine rotation speed [rad/s], Nmg is the MG rotation speed [rad/s], and the gear ratio is the gear ratio between the input shaft and the motor generator 3.

In step S 105, the ECU 10 calculates the virtual engine rotation speed based on the driver request torque, the clutch torque, and the engine inertia moment. After the process of step S105 is performed, the ECU 10 ends the virtual engine rotation speed calculation process.

When the clutch 7 is not in the engaged state, there are a state in which the clutch 7 transmits torque in a slipping state and a state in which the clutch 7 is completely released. However, since the clutch transmission torque is zero in the clutch released state, it can be handled by the same calculation method.

In the HEV mode, a change rate of the engine rotation speed is determined by the engine torque, the engine inertia moment, and the clutch transmission torque upper limit. Here, in the EV mode, the virtual engine rotation speed is calculated by the following Formula (3) from the driver request torque, the engine inertia moment, and the clutch transmission torque upper limit.

$$Ne(n) = Ne(n-1) + ((Te - Tc)/Ie) \times tp \cdots (3)$$

where, Tc is set to a positive value in the case of Ne(n-1) > input rotation speed and is set to a negative value in the case of Ne(n-1) < input rotation speed.

where, Ne(n) is the virtual engine rotation speed [rad/s], Ne(n-1) is the virtual engine rotation speed (previous value) [rad/s], Te is the driver request torque [Nm], Ie is the engine inertia [kg·m²], Tc is the clutch transmission torque upper limit [Nm], and tp is the calculation cycle [s].

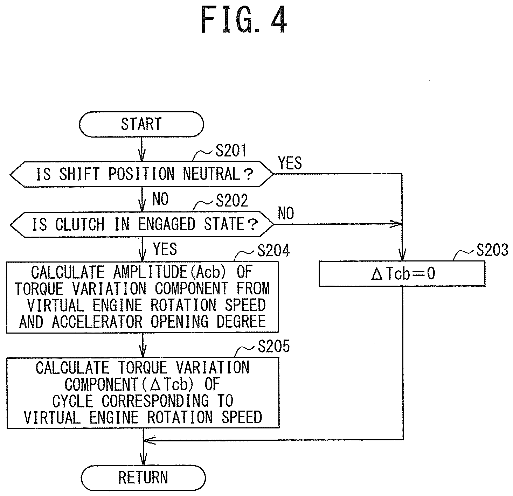

Next, a process of calculating the torque variation component ($\Delta$Tcb) in step S4 of the MG torque instruction value calculation process will be described with reference to Fig. 4.

In step S201, the ECU 10 determines whether or not the shift position is neutral. When it is determined that the shift position is not neutral, the ECU 10 performs the process of step S202.

When it is determined that the shift position is neutral, the ECU 10 performs the process of step S203.

In step S202, the ECU 10 determines whether or not the clutch 7 is in the engaged state. When it is determined that the clutch 7 is in the engaged state, the ECU 10 performs the process of step S204.

When it is determined that the clutch 7 is not in the engaged state, the ECU 10 performs the process of step S203.

Here, the engaged state of the clutch 7 is determined by the same method as in step S 103 of Fig. 3.

In step S203, the ECU 10 sets the torque variation component ($\Delta$Tcb) to zero. When the clutch 7 is not in the engaged state (the half-clutch state or the released state), the torque variation component ($\Delta$Tcb) is set to zero since the torque variation is absorbed by the slipping of the clutch 7 and is not transmitted to the drive wheel 6. After the process of step S203 is performed, the ECU 10 ends the torque variation component calculation process.

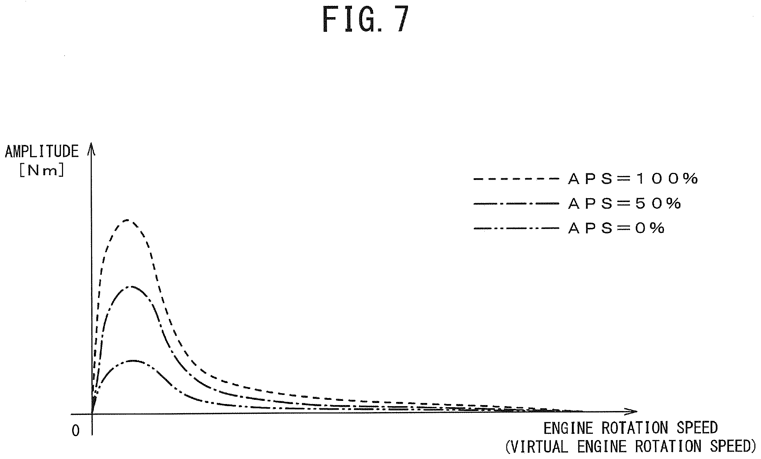

In step S204, the ECU 10 calculates the amplitude (Acb) of the torque variation component by searching the map shown in Fig. 7 based on the virtual engine rotation speed and the accelerator opening degree. After the process of step S204 is performed, the ECU 10 performs the process of step S205.

In Fig. 7, the amplitude tends to increase as the accelerator opening degree increases due to the torque variation caused by combustion. Further, since a torsional damper exists between the engine 2 and the drive wheel 6 and the torque variation is attenuated in a high rotation speed range of the engine rotation speed, the amplitude tends to increase at a low rotation.

In step S205, the ECU 10 calculates the torque variation component ($\Delta$Tcb) of the cycle corresponding to the virtual engine rotation speed. After the process of step S205 is performed, the ECU 10 ends the torque variation component calculation process.

The torque variation component ($\Delta$Tcb) is calculated by the following Formula (4) from the amplitude (Acb) of the torque variation component.

$$\Delta Tcb = Acb \times \sin\theta \cdots (4)$$

where, $\theta(n) = \theta(n-1) + Ne(n) \times$ (number of cylinders/m) $\times$ tp$\Delta$Tcb is the torque variation component [Nm], Acb is the torque variation component amplitude (map search value) [Nm], Ne(n) is the virtual engine rotation speed [rad/s], tp is the calculation cycle, and m is the coefficient for obtaining the number of combustions per rotation ("2" for four-cycle engine and " 1" for two-cycle engine).

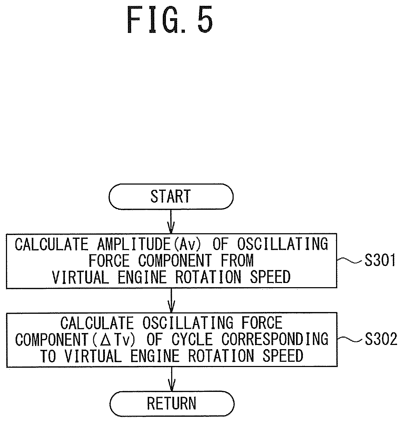

Next, a process of calculating the oscillating force component ($\Delta$Tv) in step S6 of the MG torque instruction value calculation process will be described with reference to Fig. 5.

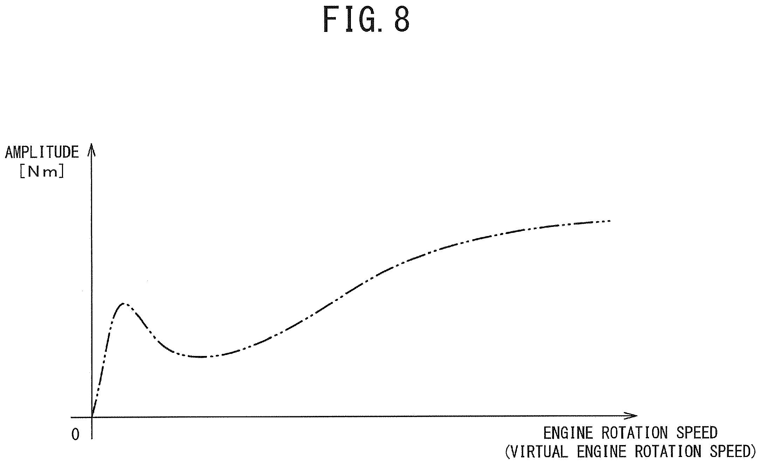

In step S301, the ECU 10 calculates the amplitude (Av) of the oscillating force component by searching the table shown in Fig. 8 based on the virtual engine rotation speed. After the process of step S301 is performed, the ECU 10 performs the process of step S302.

In Fig. 8, since the vibration caused by the oscillating force is the vibration caused by the inertial force, the amplitude becomes larger as the engine rotation speed becomes higher. However, since it is the resonance range of the engine mount at a low rotation below the idle rotation, there is a region where the amplitude becomes large even in a low rotation range.

In step S302, the ECU 10 calculates the oscillating force component (ΔTv) of the cycle corresponding to the virtual engine rotation speed. After the process of step S302 is performed, the ECU 10 ends the oscillating force component calculation process.

The oscillating force component (ΔTv) is calculated by the following Formula (5) from the amplitude (Av) of the oscillating force component. Additionally, here, an in-line four-cylinder is taken as an example. Then, since the primary vibration cancels each other, the secondary vibration which is a vibration having a frequency twice the engine rotation speed is simulated.

$$\Delta Tv = Av \times \sin\theta \cdots (5)$$

where, $\theta(n) = \theta(n-1) + Ne(n) \times l \times tp\Delta Tv$ is the oscillating force component [Nm], Av is the oscillating force component amplitude (table search value) [Nm], Ne(n) is the virtual engine rotation speed [rad/s], tp is the calculation cycle, and l is the coefficient for simulating the secondary vibration (" 1" is used for the primary vibration).

In this way, in this embodiment, in the EV mode, the ECU 10 allows the motor generator 3 to generate the virtual driving vibration corresponding to the driving vibration when the engine 2 drives the drive wheel 6 in the HEV mode and the virtual engine vibration corresponding to the vibration generated by the inertial force of the engine 2 in the HEV mode.

Accordingly, since the motor generator 3 generates the vibration in consideration of not only the virtual driving vibration but also the virtual engine vibration, it is possible to prompt the driver to perform the shift operation similar to that in the HEV mode by sound or vibration even in the EV mode.

Further, in the EV mode, the ECU 10 allows the motor generator 3 to generate the virtual engine vibration and the virtual driving vibration when the gear is in and the clutch 7 is engaged and allows the motor generator 3 to generate only the virtual engine vibration when the shift position is neutral or the clutch 7 is disengaged.

The driving vibration is the vibration generated by the torque variation caused by the combustion of the engine 2 and the vibration is not transmitted to the drive wheel 6 when the shift position is neutral or the clutch 7 is disengaged. On the other hand, since the engine vibration is the vibration caused by the oscillating force of the engine 2 and is the vibration caused by the inertial force of the piston, the crankshaft, or the like of the engine 2, this vibration is generated regardless of whether or not the gear is in or the clutch 7 is disengaged. Therefore, since the motor generator 3 generates a vibration in consideration of such a state, it is possible to prompt the driver to perform a more accurate shift operation similar to that in the HEV mode by sound or vibration even in the EV mode.

Further, in the EV mode, the ECU 10 calculates the virtual engine rotation speed from the vehicle state and is configured to calculate the virtual driving vibration to be smaller as the virtual engine rotation speed becomes higher and calculate the virtual engine vibration to be larger as the virtual engine rotation speed becomes higher when the virtual engine rotation speed is a rotation speed equal to or higher than a predetermined rotation speed.

The driving vibration is attenuated to be smaller as the rotation speed of the engine 2 becomes higher by the damper provided between the engine 2 and the drive wheel 6. On the other hand, since the oscillating force of the engine 2 is the vibration caused by the inertial force of the piston, the crankshaft, or the like of the engine 2, the oscillating force becomes larger as the rotation speed of the engine 2 becomes higher. Therefore, since the virtual driving vibration and the virtual engine vibration are calculated based on the virtual engine rotation speed calculated based on the vehicle state in the EV mode in consideration of such a state, it is possible to prompt the driver to perform a more accurate shift operation.

Further, the ECU 10 calculates the virtual driving vibration to be larger as the accelerator opening degree becomes larger and calculates the virtual engine vibration only based on the virtual engine rotation speed regardless of the accelerator opening degree.

Since the driving vibration is the torque variation caused by combustion, the virtual driving vibration is calculated to be larger as the accelerator opening degree becomes larger. Further, since the oscillating force of the engine 2 is the vibration caused by the inertial force of the engine 2, the virtual engine vibration is calculated only based on the virtual engine rotation speed. Accordingly, it is possible to prompt the driver to perform a more accurate shift operation.

Additionally, the generation of the virtual engine vibration simulating the oscillating force of the engine 2 is effective only for the "shift operation", but the virtual engine vibration may be generated in the case other than the shift operation. This is because the driver may feel uncomfortable when the virtual engine vibration is generated only during the shift operation.

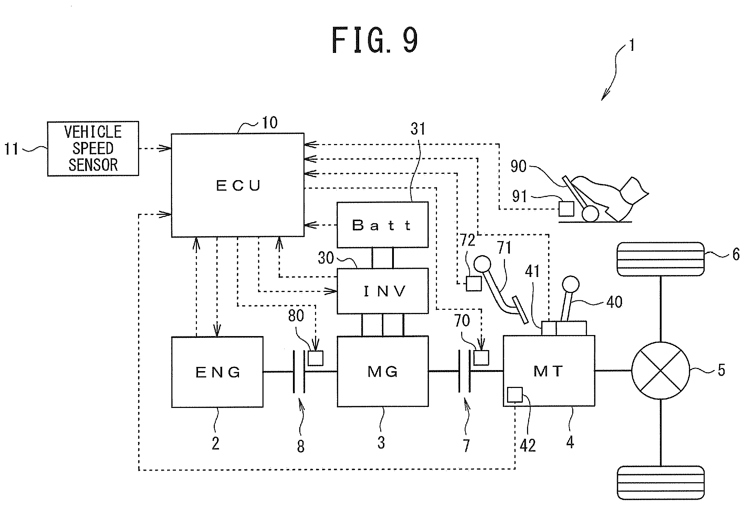

Further, in this embodiment, a configuration in which the motor generator 3 is provided in the power transmission path between the manual transmission 4 and the drive wheel 6 is shown, but as shown in Fig. 9, but this invention can be implemented similarly even in a configuration in which the motor generator 3 is provided in the power transmission path between the engine 2 and the manual transmission 4.

In Fig. 9, an automatic clutch 8 is provided in the power transmission path between the engine 2 and the motor generator 3. As the automatic clutch 8, for example, a friction clutch can be used. The engine 2 and the motor generator 3 are connected to each other through the automatic clutch 8.

The automatic clutch 8 is operated by a clutch actuator 80 and is configured to be switched between an engaged state that transmits power between the engine 2 and the motor generator 3 and a released state that does not transmit power. The clutch actuator 80 is connected to the ECU 10 and is controlled by the ECU 10.

In this case, the virtual engine rotation speed is not necessary and the MG rotation speed may be used instead of the virtual engine rotation speed used to calculate the driving torque generated by the motor generator 3 in the EV mode. The calculation of the virtual engine rotation speed of step S2 in the flowchart of Fig. 2 is deleted.

Further, it is not necessary to consider the gear ratio of the selected shift stage when calculating the MG torque instruction value in the EV mode. The following Formula (6) may be used instead of the formula calculated in step S7 of the flowchart of Fig. 2.

$$\texttt{MG torque instruction value = Tin + } \Delta \texttt{Tv} \cdots (6)$$

Further, since the torque variation of the engine 2 is not transmitted to the drive wheel 6 in a state in which the clutch 7 is disengaged or the manual transmission 4 is neutral, a condition of the clutch operation amount or the neutral state of the manual transmission 4 is not necessary for the calculation of the virtual driving vibration generated by the motor generator 3. Accordingly, the torque variation component may be calculated always by deleting the determinations of step S201 and step S202 in the flowchart of Fig. 4.

In this embodiment, an example in which the ECU 10 performs various kinds of determination or calculation based on various kinds of sensor information has been described, but this invention is not limited thereto. The hybrid vehicle 1 may include a communication unit capable of communicating with an external device such as an external server, perform various kinds of determination or calculation by the external device based on the detection information of various sensors transmitted from the communication unit, receive the determination result or calculation result by the communication unit, and perform various kinds of control using the received determination result or calculation result.

(DESCRIPTION OF REFERENCE NUMERALS)

1 ... Hybrid vehicle, 2 ... Engine, 3 ... Motor generator (electric motor), 4 ... Manual transmission (manual transmission unit), 6 ... Drive wheel, 7 ... Clutch, 10 ... ECU (control unit), 11 ... Vehicle speed sensor, 41 ... Shift position sensor, 42 ... Neutral switch, 72 ... Clutch pedal sensor, 91 ... Accelerator opening degree sensor

**Claims**

1. A control device for a hybrid vehicle, the hybrid vehicle including:

    a manual transmission unit (4) allowing a driver to manually select an arbitrary shift stage;
    an engine (2) driving a drive wheel (6) through the manual transmission unit (4);
    a clutch (7) enabling or disabling the transmission of power between the engine (2) and the manual transmission unit (4); and
    an electric motor (3),
    the control device including:

        a control unit (10) switching an EV mode allowing the vehicle to run only using the electric motor (3) as a drive source and an HEV mode allowing the vehicle to run using the engine (2) and the electric motor (3) as a drive source,
        wherein in the EV mode, the control unit (10) allows the electric motor (3) to generate driving power corresponding to driving power according to an accelerator operation, a clutch operation, and a shift operation of the driver in the HEV mode, and where the control device is **characterized in that** in the EV mode, the control unit (10) allows the electric motor (3) to generate a virtual driving vibration corresponding to a driving vibration when the engine (2) drives the drive wheel (6) in the HEV mode and a virtual engine vibration corresponding to a vibration generated by an inertial force of the engine (2) in the HEV mode.

2. The control device for the hybrid vehicle as claimed in claim 1,
    wherein the control unit (10) generates the virtual driving vibration and the virtual engine vibration by the electric motor (3) when the manual transmission unit (4) is in a gear-in state and a clutch pedal (71) is engaged in the EV mode and generates only the virtual engine vibration by the electric motor (3) when the manual transmission unit (4) is in a neutral state or the clutch pedal (71) is disengaged.

3. The control device for the hybrid vehicle as claimed in claim 1 or 2,
wherein in the EV mode, the control unit (10) calculates a virtual engine rotation speed from a vehicle state and is configured to calculate the virtual driving vibration to be smaller as the virtual engine rotation speed becomes higher and calculate the virtual engine vibration to be larger as the virtual engine rotation speed becomes higher when the virtual engine rotation speed is a rotation speed equal to or higher than a predetermined rotation speed.

4. The control device for the hybrid vehicle as claimed in any one of claims 1 to 3,
wherein the control unit (10) calculates the virtual driving vibration to be larger as an accelerator opening degree becomes larger and calculates the virtual engine vibration only based on the virtual engine rotation speed regardless of the accelerator opening degree.

**Patentansprüche**

1. Eine Steuervorrichtung für ein Hybridfahrzeug, wobei das Hybridfahrzeug Folgendes umfasst:

eine manuelle Getriebeeinheit (4), die es einem Fahrer ermöglicht, manuell eine beliebige Schaltstufe auszuwählen;
einen Motor (2), der über die manuelle Getriebeeinheit (4) ein Antriebsrad (6) antreibt;
eine Kupplung (7), die die Leistungsübertragung zwischen dem Motor (2) und der manuellen Getriebeeinheit (4) ermöglicht oder unterbindet; und
einen Elektromotor (3),
wobei die Steuervorrichtung Folgendes umfasst:

eine Steuereinheit (10), die zwischen einem EV-Modus, in dem das Fahrzeug nur unter Verwendung des Elektromotors (3) als Antriebsquelle betrieben werden kann, und einem HEV-Modus, in dem das Fahrzeug unter Verwendung des Motors (2) und des Elektromotors (3) als Antriebsquelle betrieben werden kann, umschaltet,
wobei in dem EV-Modus die Steuereinheit (10) dem Elektromotor (3) ermöglicht, eine Antriebsenergie zu erzeugen, die mit einer Antriebsenergie korrespondiert, gemäß einer Gaspedalbetätigung, einer Kupplungsbetätigung und einer Schaltbetätigung des Fahrers in dem HEV-Modus, und
wobei die Steuervorrichtung **dadurch gekennzeichnet ist, dass**
in dem EV-Modus die Steuereinheit (10) dem Elektromotor (3) ermöglicht, eine virtuelle Antriebsvibration zu erzeugen, die mit einer Antriebsvibration korrespondiert, wenn der Motor (2) das Antriebsrad (6) in dem HEV-Modus antreibt, und eine virtuelle Motorvibration, die mit einer Vibration korrespondiert, die durch eine Trägheitskraft des Motors (2) in dem HEV-Modus erzeugt wird.

2. Die Steuervorrichtung für das Hybridfahrzeug nach Anspruch 1,
wobei die Steuereinheit (10) die virtuelle Antriebsvibration und die virtuelle Motorvibration durch den Elektromotor (3) erzeugt, wenn sich die manuelle Getriebeeinheit (4) in einem Gang-Ein-Zustand befindet und ein Kupplungspedal (71) in dem EV-Modus eingerückt ist, und nur die virtuelle Motorvibration durch den Elektromotor (3) erzeugt, wenn sich die manuelle Getriebeeinheit (4) in einem neutralen Zustand befindet oder das Kupplungspedal (71) ausgerückt ist.

3. Die Steuervorrichtung für das Hybridfahrzeug nach Anspruch 1 oder 2,
wobei in dem EV-Modus die Steuereinheit (10) eine virtuelle Motordrehzahl aus einem Fahrzeugzustand berechnet und konfiguriert ist, um die virtuelle Antriebsvibration als kleiner zu berechnen, wenn die virtuelle Motordrehzahl höher wird, und um die virtuelle Motorvibration als größer zu berechnen, wenn die virtuelle Motordrehzahl höher wird, wenn die virtuelle Motordrehzahl eine Drehzahl ist, die gleich oder höher als eine vorbestimmte Drehzahl ist.

4. Die Steuervorrichtung für das Hybridfahrzeug nach einem der Ansprüche 1 bis 3,
wobei die Steuereinheit (10) berechnet, dass die virtuelle Antriebsvibration größer wird, wenn der Öffnungsgrad des Gaspedals größer wird, und die virtuelle Motorvibration nur basierend auf der virtuellen Motordrehzahl unabhängig von dem Öffnungsgrad des Gaspedals berechnet.

**Revendications**

1. Dispositif de commande pour un véhicule hybride, le véhicule hybride comportant :

   une unité de transmission manuelle (4) permettant à un conducteur de sélectionner manuellement un étage de changement de vitesse arbitraire ;
   un moteur (2) entraînant une roue motrice (6) par l'intermédiaire de l'unité de transmission manuelle (4) ;
   un embrayage (7) activant ou désactivant la transmission de puissance entre le moteur (2) et l'unité de transmission manuelle (4) ; et
   un moteur électrique (3),
   le dispositif de commande comportant :

   une unité de commande (10) commutant un mode VE permettant au véhicule de fonctionner uniquement au moyen du moteur électrique (3) en tant que source d'entraînement et un mode VEH permettant au véhicule de fonctionner au moyen du moteur (2) et du moteur électrique (3) en tant que source d'entraînement,
   dans lequel dans le mode VE, l'unité de commande (10) permet au moteur électrique (3) de générer une puissance d'entraînement correspondant à la puissance d'entraînement en fonction d'une opération d'accélérateur, d'une opération d'embrayage, et d'une opération de changement de vitesse du conducteur dans le mode VEH, et où le dispositif de commande est **caractérisé en ce que** dans le mode VE, l'unité de commande (10) permet au moteur électrique (3) de générer une vibration d'entraînement virtuelle correspondant à une vibration d'entraînement lorsque le moteur (2) entraîne la roue motrice (6) dans le mode VEH et une vibration de moteur virtuelle correspondant à une vibration générée par une force d'inertie du moteur (2) dans le mode VEH.

2. Dispositif de commande pour le véhicule hybride selon la revendication 1,
   dans lequel l'unité de commande (10) génère la vibration d'entraînement virtuelle et la vibration de moteur virtuelle par le moteur électrique (3) lorsque l'unité de transmission manuelle (4) est dans un état d'engrènement et une pédale d'embrayage (71) est en prise dans le mode VE et génère uniquement la vibration de moteur virtuelle par le moteur électrique (3) lorsque l'unité de transmission manuelle (4) est dans un état neutre ou la pédale d'embrayage (71) est dégagée.

3. Dispositif de commande pour le véhicule hybride selon la revendication 1 ou 2,
   dans lequel dans le mode VE, l'unité de commande (10) calcule une vitesse de rotation de moteur virtuelle à partir d'un état de véhicule et est configurée pour calculer la vibration d'entraînement virtuelle pour qu'elle soit plus faible à mesure que la vitesse de rotation de moteur virtuelle augmente et calculer la vibration de moteur virtuelle pour qu'elle soit plus importante à mesure que la vitesse de rotation de moteur virtuelle augmente lorsque la vitesse de rotation de moteur virtuelle est une vitesse de rotation supérieure ou égale à une vitesse de rotation prédéterminée.

4. Dispositif de commande pour le véhicule hybride selon l'une quelconque des revendications 1 à 3,
   dans lequel l'unité de commande (10) calcule la vibration d'entraînement virtuelle pour qu'elle soit plus importante à mesure qu'un degré d'ouverture d'accélérateur augmente et calcule la vibration de moteur virtuelle uniquement sur la base de la vitesse de rotation de moteur virtuelle quel que soit le degré d'ouverture d'accélérateur.

# FIG. 1

EP 3 974 227 B1

# FIG. 2

```
              ┌─────────────┐
              │    START    │
              └─────────────┘
                     │
                     ▼
┌───────────────────────────────────────────┐
│ ACQUIRE VARIOUS KINDS OF SENSOR INFORMATION │──S1
└───────────────────────────────────────────┘
                     │
                     ▼
┌───────────────────────────────────────────┐
│   CALCULATE VIRTUAL ENGINE ROTATION SPEED   │──S2
└───────────────────────────────────────────┘
                     │
                     ▼
┌───────────────────────────────────────────┐
│     CALCULATE DRIVER REQUEST TORQUE(Tdr)    │──S3
└───────────────────────────────────────────┘
                     │
                     ▼
┌───────────────────────────────────────────┐
│ CALCULATE TORQUE VARIATION COMPONENT(ΔTcb)  │──S4
└───────────────────────────────────────────┘
                     │
                     ▼
┌───────────────────────────────────────────┐
│        VIRTUAL INPUT SHAFT TORQUE(Tin)      │──S5
│              =Tdr+ΔTcb                       │
└───────────────────────────────────────────┘
                     │
                     ▼
┌───────────────────────────────────────────┐
│ CALCULATE OSCILLATING FORCE COMPONENT(ΔTv)  │──S6
└───────────────────────────────────────────┘
                     │
                     ▼
┌───────────────────────────────────────────┐
│          MG TORQUE INSTRUCTION VALUE         │──S7
│           =Tin×GEAR RATIO+ΔTv                │
└───────────────────────────────────────────┘
                     │
                     ▼
              ┌─────────────┐
              │   RETURN    │
              └─────────────┘
```

# FIG. 3

START

IS SHIFT POSITION NEUTRAL ? — S101

NO — S103

IS CLUTCH IN ENGAGED STATE ? — YES

NO — S105

CALCULATE VIRTUAL ENGINE
ROTATION SPEED BASED ON
DRIVER REQUEST TORQUE,
CLUTCH TORQUE,
AND ENGINE INERTIA MOMENT

CALCULATE VIRTUAL ENGINE
ROTATION SPEED BASED ON
MG ROTATION SPEED
AND SHIFT POSITION — S104

CALCULATE VIRTUAL ENGINE
ROTATION SPEED BASED ON
DRIVER REQUEST TORQUE
AND ENGINE INERTIA MOMENT — S102

RETURN

# FIG. 4

START

~S201

IS SHIFT POSITION NEUTRAL ?     YES

NO     ~S202

IS CLUTCH IN ENGAGED STATE ?     NO

YES     ~S204

CALCULATE AMPLITUDE(Acb) OF TORQUE VARIATION COMPONENT FROM VIRTUAL ENGINE ROTATION SPEED AND ACCELERATOR OPENING DEGREE

~S203

$\Delta Tcb=0$

~S205

CALCULATE TORQUE VARIATION COMPONENT($\Delta Tcb$) OF CYCLE CORRESPONDING TO VIRTUAL ENGINE ROTATION SPEED

RETURN

# FIG. 5

```
          ┌─────────────┐
          │    START    │
          └──────┬──────┘
                 ↓
┌───────────────────────────────────┐
│  CALCULATE AMPLITUDE(Av) OF OSCILLATING │
│         FORCE COMPONENT FROM          │──〜S301
│     VIRTUAL ENGINE ROTATION SPEED     │
└───────────────┬───────────────────┘
                 ↓
┌───────────────────────────────────┐
│      CALCULATE OSCILLATING FORCE       │
│ COMPONENT(△Tv) OF CYCLE CORRESPONDING │──〜S302
│    TO VIRTUAL ENGINE ROTATION SPEED    │
└───────────────┬───────────────────┘
                 ↓
          ┌─────────────┐
          │   RETURN    │
          └─────────────┘
```

FIG. 6

# FIG. 7

AMPLITUDE [Nm]

‑ ‑ ‑ ‑ ‑ ‑ APS＝１００％
‑ ‑‑ ‑‑ ‑ APS＝５０％
‑‑‑ ‑‑‑ ‑ APS＝０％

ENGINE ROTATION SPEED
(VIRTUAL ENGINE ROTATION SPEED)

0

EP 3 974 227 B1

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009292314 A
- US 2020122712 A1
- JP H11346402 A
- US 2014236405 A1
- US 2019367009 A1